(19) Europäisches Patentamt
European Patent Office
Office européen des brevets

(11) EP 0 572 910 B1

(12) **EUROPÄISCHE PATENTSCHRIFT**

(45) Veröffentlichungstag und Bekanntmachung des Hinweises auf die Patenterteilung:
**26.06.1996 Patentblatt 1996/26**

(51) Int. Cl.$^6$: **B01D 71/22**, A61M 1/16, C08B 11/00

(21) Anmeldenummer: **93108473.5**

(22) Anmeldetag: **26.05.1993**

(54) **Dialysemembran aus Polysaccharidether II**

Polysaccharide ether dialysis membrane

Membrane pour dialyse à base d'éthers de polysaccharides

(84) Benannte Vertragsstaaten:
**DE ES FR GB IT NL SE**

(30) Priorität: **05.06.1992 DE 4218568**
**08.05.1993 DE 4315351**

(43) Veröffentlichungstag der Anmeldung:
**08.12.1993 Patentblatt 1993/49**

(73) Patentinhaber: **Akzo Nobel N.V.**
**NL-6824 BM Arnhem (NL)**

(72) Erfinder:
- **Diamantoglou, Michael, Dr.**
**W-8765 Erlenbach/Main (DE)**
- **Dünweg, Gustav**
**W-5600 Wuppertal 2 (DE)**
- **Rintelen, Thomas, Dr.**
**W-5830 Schwelm (DE)**

(74) Vertreter: **Fett, Günter et al**
**Akzo Nobel Faser AG**
**Postfach 10 01 49**
**D-42097 Wuppertal (DE)**

(56) Entgegenhaltungen:
**EP-A- 0 339 502**
**EP-A- 0 459 293**
**EP-A- 0 550 879**
**DE-A- 3 524 596**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 572 910 B1

## Beschreibung

Die Erfindung betrifft eine Dialysemembran für die Hämodialyse in Form von Flachfolien, Schlauchfolien oder Hohlfäden aus Polysaccharidether.

An Dialysemembranen für die Hämodialyse werden sehr hohe Anforderungen hinsichtlich der Biocompatibilität gestellt, damit das an den Membranen vorbeifließende Blut möglichst wenig beeinträchtigt wird. Wesentliche Parameter der Biocompatibilität sind dabei Thrombogenität, Leucopenie und Komplementaktivierung.

Aus der DE-OS 35 24 596 ist bereits eine Dialysemembran mit verbesserter Biocompatibilität bekannt, die in der Lage war, Leucopenie und Komplementaktivierung in erheblichem Umfange zu reduzieren und die sich durch eine modifizierte Cellulose auszeichnet, deren mittlerer Substitutionsgrad 0,02 bis 0,07 beträgt. Vorzugsweise enthält die bekannte Dialysemembran aus modifizierter Cellulose solche modifizierte Cellulose, die eine durch die Formel

Cellulose-R'-X-Y

wiedergegebene Struktur aufweist, wobei

X für $-NR''-$ und/oder $-\overset{+}{N}R''_2-$ und/oder -S- und/oder -SO- und/oder $-SO_2-$ und/oder

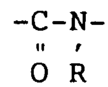

und/oder -CO-O- und/oder -O-,

Y für -R und/oder $-NR_2$ und/oder $-Si(OR'')_3$ und/oder $-SO_3H$ und/oder -COOH und/oder $-PO_3H_2$ und/oder $-\overset{+}{N}HR_2$ bzw. deren Salze,

R' für eine Alkylengruppe und/oder Cycloalkylengruppe und/oder Arylengruppe mit insgesamt 1 bis 25 C-Atomen,

R'' für ein Wasserstoffatom oder R und

R für eine Alkylgruppe mit 1 bis 5 C-Atomen und/oder eine Cycloalkylgruppe und/oder Arylgruppe steht.

Diese Membranen zeigen jedoch im Gegensatz zu klassischen Dialysemembranen, wie beispielsweise Cuprophan[R] eine erhöhte Thrombogenität, insbesondere dann, wenn der Substituent eine ionische Gruppe ist, vor allem aber dann, wenn der Substituent eine basische Gruppe ist.

Weiterhin ist aus der EP-A-0 459 293 eine Dialysemembran für die Hämodialyse in Form von Flachfolien, Schlauchfolien oder Hohlfäden aus Polysaccharidethern bekannt, die dadurch gekennzeichnet ist, daß der Polysaccharidether eine durch die Formel

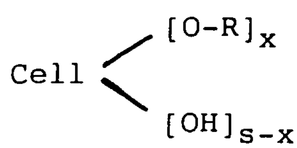

wiedergegebene Struktur aufweist, worin Cell das Gerüst des unmodifizierten Cellulosemoleküls oder des Chitinmoleküls jeweils ohne Hydroxylgruppen ist, s beim unmodifizierten Cellulosemoleküls 3 und beim Chitinmolekül 2 beträgt und x dem Veretherungsgrad entspricht, der im Bereich von 0,08 bis (s - 0,4) liegt und worin R ein gegebenenfalls substituierter Alkyl-, Alkenyl- und/oder Alkinyl- und/oder Cycloalkyl- und/oder Cycloalkenyl-und/oder Cycloalkinyl- und/oder Arylalkyl- und/oder Arylalkenyl- und/oder Arylalkinyl- und/oder Bisarylalkyl-und/oder Bisarylalkenyl- und/oder Bisarylalkinyl-Rest mit 5 bis 40 C-Atomen und/oder der Rest einer kondensierten aromatischen (ggf. substituierten) Verbindung und/oder der Rest einer heterocyclischen (ggf. substituierten) Verbindung ist.

Das Polysaccharid ist relativ hoch substituiert und enthält auch ionische Gruppen, die ebenfalls die Thrombogenität erhöhen.

Die EP-A- 0 550 879, die unter Artikel 54(3) EPÜ fällt, schlägt vor, die Biokompatibilität von cellulosischen Flachmembranen dadurch zu verbessern, daß man diese während oder nach ihrer Herstellung mit Celluloseethern und/oder Celluloseestern und/oder Cellulosecarbamaten beschichtet, wobei der Modifizierungsgrad dieser als Beschichtungsmittel dienenden modifizierten Cellulosen im Bereich von 0,002 bis 3 liegt.

Nach der EP-A-0 339 502 ist ein Verfahren zu einer nachträglichen chemischen Modifizierung von cellulosischen Dialysemembranen zwecks Verbesserung der Biokompatibilität bekannt, in dem gelöste Modifizierungsreagentien an

einer Oberfläche der Dialysemembran vorbeigeführt werden. Eine solche Verfahrensweise ist mit sehr aufwendigen Maßnahmen verbunden und erfordert auch sehr intensive Waschprozesse.

Neben dem Umstand, daß Dialysemembranen aus synthetischen bzw. natürlichen Polymeren bei ihrem Einsatz in künstlichen Nieren sehr leicht eine Gerinnung des Blutes hervorrufen können, die durch entsprechende medikamentöse Behandlung weitgehend verhindert wird, tritt bei der Dialysebehandlung eines Nierenkranken mit Dialysatoren, die Membranen aus regenerierter Cellulose enthalten, in der ersten Zeit der Dialysebehandlung ein vorübergehender Leukozytenabfall auf. Dieser Effekt wird als Leukopenie bezeichnet.

Leukopenie ist eine Erniedrigung der Leukozytenzahl (weiße Blutkörper) im Blutkreislauf. Die Zahl der weißen Blutkörper beim Menschen beträgt ca. 4000 bis 12000 Zellen/$mm^3$. Die Leukopenie bei der Dialyse ist am stärksten ausgeprägt 15 bis 20 Min. nach Beginn der Behandlung, wobei die Neutrophilen (das sind die mit neutralen oder gleichzeitig mit sauren und basischen Farbstoffen anfärbbaren Leukozyten) fast vollständig verschwinden können. Danach erholt sich die Zahl der Leukozyten innerhalb etwa einer Stunde wieder auf fast den Ausgangswert oder übersteigt diesen. Wird nach Erholung der Leukozyten ein neuer Dialysator angeschlossen, tritt wieder Leukopenie im gleichen Ausmaß ein.

Cellulose-Membranen verursachen eine ausgeprägte Leukopenie. Auch wenn die klinische Bedeutung der Leukopenie wissenschaftlich nicht geklärt ist, besteht doch der Wunsch nach einer Dialysemembran für die Hämodialyse, die den Effekt der Leukopenie nicht zeigt, ohne daß dadurch die anderen sehr erwünschten positiven Eigenschaften von Dialysemembranen aus regenerierter Cellulose beeinträchtigt werden.

Bei der Hämodialyse mittels Membranen aus regenerierter Cellulose hat man neben der Leukopenie auch eine deutliche Komplement-Aktivierung festgestellt. Das Komplement-System innerhalb des Blutserums ist ein komplexes, aus vielen Komponenten bestehendes Plasmaenzym-System, das auf verschiedene Weise der Abwehr von Schädigungen durch eindringende fremde Zellen (Bakterien u.a.) dient. Wenn Antikörper gegen den eindringenden Organismus vorhanden sind, kann komplementspezifisch durch den Komplex der Antikörper mit antigenen Strukturen der Fremdzellen aktiviert werden, anderenfalls erfolgt auf einem Alternativ-Weg durch besondere Oberflächenmerkmale der Fremdzellen die Komplement-Aktivierung. Das Komplement-System beruht auf einer Vielzahl von Plasma-Proteinen. Nach Aktivierung reagieren diese Proteine spezifisch in einer bestimmten Reihenfolge miteinander und am Ende wird ein zellschädigender Komplex gebildet, der die Fremdzelle zerstört.

Aus einzelnen Komponenten werden Peptide freigesetzt, die Entzündungserscheinungen auslösen und gelegentlich auch unerwünschte pathologische Folgen für den Organismus haben können. Es wird angenommen, daß die Aktivierung bei Hämodialysemembranen aus regenerierter Cellulose über den alternativen Weg erfolgt. Objektiv festgestellt werden diese Komplement-Aktivierungen durch eine Bestimmung der Komplement-Fragmente C3a und C5a.

In diesem Zusammenhang wird auf folgende Arbeiten hingewiesen: D.E. Chenoweth et al., Kidney International Vol. 24, Seite 764 ff, 1983 und D.E. Chenoweth, Asaio-Journal Vol. 7, Seite 44 ff, 1984.

Im Rahmen der vorliegenden Erfindung wurde die Komplement-Aktivierung anhand der Fragmente C5a beurteilt. Dazu wurden in vitro 300 ml heparinisiertes Blutplasma über einen Zeitraum von 4 Std. mit einem Plasmafluß von 100 ml/min durch einen Dialysator mit 1 $m^2$ effektiver Austauschfläche rezirkuliert. In dem Plasma wurden die C5a-Fragmente mit Hilfe der RIA-Methode (Upjohn-Test) bestimmt. Die relative Komplement-Aktivierung für den jeweiligen Meßzeitpunkt wurde durch Bildung des Verhältnisses der Konzentration zum Zeitpunkt der Probenahme mit dem Anfangswert in Prozent errechnet. Zur Bewertung wurde der Meßwert nach 4 Std. Rezirkulationszeit herangezogen. Flachmembranen werden mit heparinisiertem Blutplasma 3 Stunden inkubiert und anschließend die C5a-Fragmente bestimmt.

Die Thrombogenität wurde anhand von TAT (Thrombin-anti-thrombin) und PC (platelet count) beurteilt.

Die Erhöhung des beta-2-Mikroglobulinspiegels bei Langzeit-Dialysepatienten wird nach Verwendung von Membranen aus regenerierter Cellulose beobachtet und wird darauf zurückgeführt, daß diese Membranen im Molekularbereich von 1000 bis 20.000 weniger durchlässig sind und die Mikroglobuline bei der Dialyse deshalb nicht in ausreichendem Maße entfernt werden. An die üblichen Membranen aus regenerierter Cellulose adsorbiert sich das beta-2-Mikroglobulin nicht in nennenswertem Umfang. Hierzu aber können in unerwarteter Weise die erfindungsgemäßen Cellulosederivate beitragen.

Der Durchschnittspolymerisationsgrad DP wurde in einer Cuen-Lösung nach DIN 54270 bestimmt.

Der Veretherungsgrad wurde anhand der Analysenergebnisse bestimmt, die für die Substituenten bekannt und typisch sind, beispielsweise Stickstoff nach Kjeldahl, Schwefel nach Schöniger und Alkyl- bzw. Aryl-Reste mit Hilfe der NMR-Spektroskopie.

Weiterhin wurde festgestellt, daß es wünschenswert ist, die Thrombogenität und die Heparinadsorption, die insbesondere bei den Polysaccharidethern gemäß der DE-OS 35 24 596 in deutlichem Maße auftritt, zu vermeiden. Außerdem wird zur Kostendämpfung eine mehrfachverwendbare Dialysemembran aus Polysaccharidethern mit noch geringerem Modifizierungsgrad als wie sie in der EP-A- 0 459 293 beschrieben sind, angestrebt.

Bei den bisher angewendeten Verfahren zur Vorbereitung einer Wiederverwendung wurden jedoch gerade die für die Biocompatibilität maßgeblichen Parameter deutlich beeinträchtigt und die Dampfsterilisierung führte zu einer Vergilbung der Membranen.

Obwohl bereits Dialysemembranen aus Polysaccharidether mit brauchbaren Biocompatibilitätseigenschaften bekannt sind, besteht das Bedürfnis, diese weiter zu verbessern.

Aufgabe der Erfindung war es deshalb, mehrfach wiederverwendbare Dialysemembranen aus sehr niedrig substituierten Cellulosederivaten zur Verfügung zu stellen, deren Biokompatibilitätseigenschaften durch den sehr niedrigen Substitutionsgrad nicht beeinträchtigt werden, die darüber hinaus eine dem Cuprophan$^R$ vergleichbare Thrombogenität und Heparinadsorption aufweisen und die sich auch mit höheren Stoffkonzentrationen unter Verwendung der an sich bekannten Lösungsmittel erheblich wirtschaftlicher herstellen lassen.

Diese Aufgabe wird bei einer Dialysemembran gemäß dem Oberbegriff dadurch gelöst, daß der Polysaccharidether eine durch die Formel

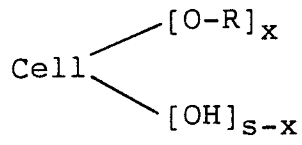

wiedergegebene Struktur aufweist, worin Cell das Gerüst des unmodifizierten Cellulosemoleküls oder des Chitinmoleküls jeweils ohne Hydroxylgruppen ist, s beim unmodifizierten Cellulosemolekül 3 und beim Chitinmolekül 2 beträgt und x dem Veretherungsgrad entspricht, der im Bereich von 0,001 bis 0,079 liegt und worin R ein Alkyl-, Alkenyl-, Alkinyl-, Cycloalkyl- und/oder Cycloalkenyl-, Cycloalkinyl-, Aryl-, Arylalkyl-, Arylalkenyl- und/oder Arylalkinyl-Rest mit 3 bis 25 C-Atomen und/oder der Rest einer heterocyclischen Verbindung mit 3 bis 25 C-Atomen ist, die mit der Maßgabe substituiert sein können, daß der Substituent eine nicht-ionische Gruppe OR', SR', Halogen und/oder R' darstellt, worin R'=H, Methyl, Ethyl oder R ist und wobei dann die Kohlenstoffkette durch Sauerstoff- oder Schwefelatome unterbrochen sein kann.

In den Unteransprüchen sind bevorzugte Ausführungsformen gekennzeichnet. So können über die Gruppe R die Eigenschaften des Membranmaterials beeinflußt werden, wie beispielsweise die Löslichkeit in wäßrigen Systemen und die Viskosität einer solchen Lösung.

Gemäß einer Ausführungsform entspricht R einer Benzyl-, Methylbenzyl-, Methoxybenzyl-, Chlorbenzyl-, Hexyl-, Dodecyl- oder Octadecyl-Gruppe.

Gemäß einer anderen Ausführungsform der Erfindung, entspricht R einer Hydroxypropyl-, Hydroxybutyl-, Hydroxydodecyl-, 2-Hydroxypropylbutylether-, 2-Hydroxypropyldodecylether, 2-Hydroxypropylcyclohexylether-, 2-Hydroxypropylbenzylether- oder 2-Hydropropylphenylether-Gruppe.

In einer bevorzugten Ausführungsform der Erfindung beträgt der Veretherungsgrad x = 0,001 bis 0,019.

In einer weiteren bevorzugten Ausführungsform der Erfindung beträgt der Veretherungsgrad x = 0,071 bis 0,079.

Bevorzugt wird die Dialysemembran aus einer wäßrigen Spinnlösung, die Polysaccharidether enthält, hergestellt.

Bevorzugt ist die wäßrige Spinnlösung eine Cuoxamlösung.

Die Membran kann auch aus einer wasserhalltigen N-Oxid-tert.-Amin-Spinnlösung, die Polysaccharidether enthält, hergestellt werden.

Bevorzugt ist dabei die wasserhaltige N-Oxid-tert.-Amin-Spinnlösung eine N-Methylmorpholin-N-oxid-Lösung.

Gemäß einer weiteren Ausführungsform der Erfindung kann die Membran aus einem Lithiumchlorid-haltigen amidischen organischen Lösungsmittel, welches den Polysaccharidether enthält, hergestellt werden. Dabei ist das Lithiumchlorid-haltige Lösungsmittel Lithiumchlorid/Dimethylacetamid oder Lithiumchlorid/N-Methylpyrrolidon.

Bevorzugt enthält die Spinnlösung 2 bis 25 Gew% Polysaccharid, besonders bevorzugt jedoch 5 - 15 Gew% Polysaccharid.

Bevorzugt weist die Spinnlösung eine Viskosität von 10 bis 300 Pa.s auf.

Für die Erfindung hat es sich als vorteilhaft erwiesen, wenn der Polysaccharidether einen Polymerisationsgrad (DP) von 200 bis 5000 aufweist.

Unter dem mittleren Substitutionsgrad (x) des durch Substitution modifizierten Polysaccharides soll im Rahmen der vorliegenden Erfindung die mittlere Anzahl der Substituenten pro 1 Anhydroglucoseeinheit verstanden werden.

Die Einstellung des gewünschten mittleren Substitutionsgrades kann durch das molare Verhältnis von Polysaccharid zu Veretherungsreagenz oder durch Vermischung von unterschiedlich substituierten Polysacchariden bzw. substituierten mit nichtsubstituierten Polysacchariden erfolgen.

Die Erfindung wird anhand der nachstehenden Beispiele erläutert.

**Beispiel 1:**

In einem 10 l Drais-Mischer wurden 324 g (2 Mol) Linters-Cellulose (DP: 1350 in Cuen) mit 55,2 g (1,38 Mol) Natriumhydroxid, gelöst in 250 ml Wasser, eine Stunde bei 16°C alkalisiert. Nach Zusatz von 250 ml i-Propanol und 58,19 g (0,46 Mol) Benzylchlorid wurde das Gemisch sechs Stunden bei 80°C gerührt. Das Reaktionsprodukt wurde in Ethanol

aufgenommen, abgesaugt, nacheinander mit Ethanol, Wasser und Ethanol alkali- und chloridfrei gewaschen und im Vakuumtrockenschrank bei 60°C getrocknet. Dabei wurden 336,8 g eines Produktes mit einem Veretherungsgrad von x = 0,076 erhalten.

Aus dieser Benzylcellulose wurde nach üblicher Verfahrensweise eine Cuoxamlösung mit 9 Gew% Polysaccharidgehalt hergestellt und im Labor zu Flachmembranen verarbeitet. Im Vergleich zu unmodifizierter Cellulose-Membran ist die C5a-Aktivierung um 95% vermindert. Die Thrombogenität ist vergleichbar mit der vom Cuprophan$^{R}$.

Ein Teil der Membranen wurde bei 121°C 30 min lang mit Wasserdampf sterilisiert. Nach der Dampfbehandlung zeigten die Membranen gegenüber der unmodifizierten Cellulose-Membran eine C5a-Reduktion von 85%.

Ebenfalls zu keinem nennenswerten Aktivitätsverlust führte eine 15-minütige Behandlung der Membranen mit 1%iger wäßriger Natriumhypochlorit-Lösung bzw. 4%iger wäßriger Peressigsäure-Lösung. Die C5a-Reduktion betrug 90%.

Die Membranen absorbieren nach der Testvorschrift der Deutschen Kabi Vitrum GmbH, Diagnostika, kein Heparin.

**Beispiele 2 - 5:**

Die Benzylcellulose von Beispiel 1 wurde mit unterschiedlicher Menge an unmodifizierter Linters Cellulose vermischt, in Cuoxam gelöst (9 Gew% Polysaccharidgehalt) und im Labor zu Flachmembranen verarbeitet. Das Mischungsverhältnis sowie die im Vergleich zu unmodifizierter Cellulose-Membran erzielte C5a-Reduktion sind in der Tabelle 1 zusammengestellt.

Tabelle 1

| Beispiel | Mischungsverhältnis | | x | C5a-Reduktion % |
|---|---|---|---|---|
| | Benzylcellulose Teile | Linters Cellulose Teile | | |
| 2 | 20 | 80 | 0,015 | 86 |
| 3 | 15 | 85 | 0,011 | 80 |
| 4 | 10 | 90 | 0,007 | 77 |
| 5 | 5 | 95 | 0,004 | 55 |

Die Membranen der Beispiele 2 bis 5 wiesen eine dem Cuprophan vergleichbare Thrombogenität auf.

**Beispiel 6:**

In einem 250 l Drais-Mischer wurden 9720 g (60 Mol) Linters Cellulose (DP = 1350 in Cuen) mit 1800 g (45 Mol) Natriumhydroxid, gelöst in 13,5 l Wasser, eine Stunde bei 18°C alkalisiert. Nach dem Zusatz von 1897,5 g (15 Mol) Benzylchlorid wurde das Gemisch vier Stunden bei 90°C gerührt. Das Reaktionsprodukt wurde in 200 l Wasser aufgenommen, abzentrifugiert, nacheinander mit Wasser, Isopropanol und Wasser gewaschen und im Umlufttrockenschrank bei 60°C getrocknet. Dabei wurden 10 kg eines Produktes mit einem Veretherungsgrad von x = 0,078 erhalten.

Aus dieser Benzylcellulose wurde nach bekannter Verfahrensweise eine Cuoxam-Spinnlösung hergestellt, die 9 Gew% Benzylcellulose, 8,3 Gew% $NH_3$ und 3,91 Gew% Cu enthielt. Diese wurde mittels einer Hohlfadenspinndüse, deren Ringspalt eine Austrittsfläche von 0,47 $mm^2$ besaß und deren Innenfüllungszuführung einen Durchmesser von 0,85 mm aufwies, zu einem Hohlfaden versponnen, indem die Spinnlösung zusammen mit Isopropylmyristat als hohlraumbildende Innenfüllung senkrecht nach unten aus der Spinndüse austrat und nach einer Luftstrecke von 4 cm in ein wäßriges Fällbad von 40°C eintauchte, welches 110 g/l $H_2SO_4$ enthielt. Die Menge der Spinnlösung betrug 4,5 ml/min und die Menge der Innenfüllung 2,1 ml/min.

Der im Fällbad verfestigte Hohlfaden wurde zur Regenerierung und Neutralisierung durch konventionelle Bäder mit verdünnter Schwefelsäure und Wasser geführt, am Ende der Strecke durch ein wäßriges Glycerinbad geleitet und anschließend auf einem Trommeltrockner bei 75°C bis zu einem Restwassergehalt von 10,2% getrocknet. Der Glyceringehalt des trockenen Fadens betrug 4,4%.

Bei einer Spinngeschwindigkeit von 55 m/min entstand ein Hohlfaden mit 8,7 µm Wandstärke und einem inneren Durchmesser von 202 µm.

Die Bruchkraft dieses Hohlfadens betrug 119 cN bei einer Bruchdehnung von 26,2%.

Der Hohlfaden wurde zu Testkörpern verarbeitet, an denen folgende Daten ermittelt wurden:

| | |
|---|---|
| UFR: | 6,09 • $10^{-2}$ ml/h • $m^2$ • Pa (8,1 ml/h • $m^2$ • mm Hg) |
| DL-Vit.B12: | 6,6 cm/min • $10^{-3}$ |
| DL-Kreatinin: | 54,5 cm/min • $10^{-3}$ |
| (DL = Dialysierleistung) | |

Der Siebkoeffizient für Albumin war Null, jener für Cytochrom-C betrug 0,15.

Im Vergleich zu Cuprophan$^R$ ist die C5a-Aktivierung um 92% vermindert. Die Thrombogenität und die Heparin Absorption ist mit der vom Cuprophan$^R$ vergleichbar.

**Beispiel 7:**

In einem 250 l Drais-Mischer wurden 9720 g (60 Mol) Linters Cellulose (DP = 1350 in Cuen) mit 1944 g (48,6 Mol) Natriumhydroxid, gelöst in 13,5 l Wasser, eine Stunde bei 18°C alkalisiert. Nach dem Zusatz von 2049,3 g (16,2 Mol) Benzylchlorid wurde das Gemisch zwei Stunden bei 90°C gerührt. Das Reaktionsprodukt wurde in 200 l Wasser aufgenommen, abzentrifugiert, nacheinander mit Wasser, Isopropanol und Wasser gewaschen und im Umlufttrockenschrank bei 60°C getrocknet. Dabei wurden 10,1 kg eines Produktes mit einem Veretherungsgrad von x = 0,088 erhalten.

Nach bekannter Verfahrensweise wurde eine Cuoxam-Spinnlösung hergestellt, die 7,2 Gew% Linters Cellulose, 1,8 Gew% der oben synthetisierten Benzylcellulose, 8,3 Gew% $NH_3$ und 3,91 Gew% Cu enthielt. Diese wurde mittels einer Hohlfadenspinndüse, deren Ringspalt eine Austrittsfläche von 0,47 $mm^2$ besaß und deren Innenfüllungszuführung einen Durchmesser von 0,85 mm aufwies, zu einem Hohlfaden versponnen, indem die Spinnlösung zusammen mit Isopropylmyristat als hohlraumbildende Innenfüllung senkrecht nach unten aus der Spinndüse austrat und nach einer Luftstrecke von 4 cm in ein wäßriges Fällbad von 18°C eintauchte, welches 110 g/l NaOH, 4 g/1 $NH_3$ und 0,8 g/l Cu enthielt. Die Menge der Spinnlösung betrug 4,5 ml/min und die Menge der Innenfüllung 2,1 ml/min.

Der im Fällbad verfestigte Hohlfaden wurde zur Regenerierung und Neutralisierung durch konventionelle Bäder mit verdünnter Schwefelsäure und Wasser geführt, am Ende der Strecke durch ein wäßriges Glycerinbad geleitet und anschließend auf einem Trommeltrockner bei 75°C bis zu einem Restwassergehalt von 10,5% getrocknet. Der Glyceringehalt des trockenen Fadens betrug 4,5%. Der Hohlfaden wies einen mittleren Veretherungsgrad von x = 0,017 auf.

Bei einer Spinngeschwindigkeit von 55 m/min entstand ein Hohlfaden mit 8,2 µm Wandstärke und einem inneren Durchmesser von 204 µm.

Die Bruchkraft dieses Hohlfadens betrug 118 cN bei einer Bruchdehnung von 28,2%.

Der Hohlfaden wurde zu Testkörpern verarbeitet, an denen folgende Daten ermittelt wurden:

| | |
|---|---|
| UFR: | 5,64 • $10^{-2}$ ml/h • $m^2$ • Pa (7,5 ml/h • $m^2$ • mm Hg) |
| DL-Vit.B12: | 6,8 cm/min • $10^{-3}$ |
| DL-Kreatinin: | 56,5 cm/min • $10^{-3}$ |

Der Siebkoeffizient für Albumin war Null, jener für Cytochrom-C betrug 0,18.

Im Vergleich zu Cuprophan$^R$ ist die C5a-Aktivierung um 90% vermindert. Die Thrombogenität und die Heparin-Absorption ist mit der vom Cuprophan$^R$ vergleichbar.

**Beispiel 8:**

Eine Cuoxam-Spinnlösung der gleichen Zusammensetzung wie in Beispiel 7 wurde in ein wäßriges Fällbad von 40°C, welches 110 g/l $H_2SO_4$ enthielt, zu Hohlfäden versponnen.

Die sonstigen Spinnbedingungen stimmten mit denen vom Beispiel 7 überein.

Der im sauren Fällbad verfestigte Hohlfaden durchlief alle konventionellen Bäder und den Trommeltrockner wie in Beispiel 7. Die aus diesem Hohlfaden gefertigten Testkörper wiesen folgende Daten auf:

| | |
|---|---|
| Veretherungsgrad: | x = 0,017 |
| UFR: | $4,36 \cdot 10^{-2}$ ml/h • m² • Pa (5,8 ml/h • m² • mm Hg) |
| DL-Vit.B12: | 6,5 cm/min • $10^{-3}$ |
| DL-Kreatinin: | 52 cm/min • $10^{-3}$ |
| Siebkoeffizient für Albumin: | 0 |
| Siebkoeffizient für Cytochrom-C.: | 0,11 |

Die mechanischen Daten blieben nahezu unverändert, nämlich Bruchkraft 124 cN und Bruchdehnung 27,8%. Die Wandstärke betrug 7,9 µm und der Innendurchmesser 198 µm.

Im Vergleich zu Cuprophan^R ist die C5a-Aktivierung um 88% vermindert. Die Thrombogenität ist mit der vom Cuprophan^R vergleichbar.

**Beispiel 9:**

Es wurde eine Cuoxam-Spinnlösung mit einem Gehalt von 4,9 Gew% Linters Cellulose, 1,3 Gew% Benzylcellulose aus Beispiel 6, 8,5 Gew% $NH_3$ und 2,6 Gew% Cu hergestellt. Diese wurde mittels einer Hohlfadendüse mit einem Austrittsschlitz von 0,08 mm² Fläche und einer Innenfüllungsbohrung von 0,25 mm Durchmesser so zu einem Hohlfaden versponnen, daß die Spinndüse 18 cm unter der Fällbadoberfläche mit nach oben zeigenden Austrittsöffnungen angebracht war. Als Innenfüllung diente trockener Stickstoff. Die Menge der Spinnlösung betrug 7,0 ml/min und die Menge des Stickstoffes 2,0 ml/min bei einem Druck von 22 mbar.

Das wäßrige Fällbad (Temperatur = 19,5°C) enthielt 130 g/l NaOH, 6 g/l$NH_3$ und 0,5 g/l Cu.

Der aus der untergetauchten Spinndüse austretende Hohlfaden wurde senkrecht nach oben durch das Fällbad geführt und in einer Höhe von 30 cm oberhalb des Badspiegels zur Weiterbehandlung in Maschinenlaufrichtung umgelenkt.

Die weitere Behandlung erfolgte in konventionellen Bädern wie in Beispiel 7.

Nach dem Trocknen enthielt der Hohlfaden eine Restmenge von 16% Wasser und einen Glyceringehalt von 52%. Der mittlere Veretherungsgrad betrug x = 0,016.

Die Wandstärke betrug 18,2 µm und der innere Durchmesser 204 µm bei einer Bruchkraft von 62 cN und einer Bruchdehung von 52%.

Folgende Daten konnten an diesem Material gemessen werden:

| | |
|---|---|
| UFR: | $42,11 \cdot 10^{-2}$ ml/h • m² • Pa (56 ml/h • m² • mm Hg) |
| DL-Vit.B12: | 15,8 cm/min • $10^{-3}$ |
| DL-Kreatinin: | 58 cm/min • $10^{-3}$ |
| Siebkoeffizient für Albumin: | 0,045 |
| Siebkoeffizient für Cytochrom-C: | 0,815 |

Im Vergleich zu Cuprophan^R ist die C5a-Aktivierung um 82% vermindert. Die Thrombogenitätsparameter TAT und PC waren mit denen vom Standard-Cuprophan^R vergleichbar.

Dagegen wurden an unter gleichen Spinnbedingungen hergestellte Hohlfaden aus reiner Linters Cellulose deutliche höhere TAT-Werte gemessen. Gegenüber dem Standard-Cuprophan lagen diese um 40% höher.

An Hohlfäden aus Diethylaminoethylcellulose mit einem mittleren Veretherungsgrad von x = 0,02, die analog dem Beispiel 7 hergestellt wurden, sind in dieser Versuchsserie wesentlich höhere TAT-Werte gemessen worden. Gegenüber dem Standard-Cuprophan^R lagen sie um 80% höher.

**Beispiel 10:**

Eine Cuoxam-Spinnlösung der gleichen Zusammensetzung wie in Beispiel 7 wurde mit eingetauchter Spinndüse und einer Stickstoffinnenfüllung mittels der gleichen Spinnanordnung wie in Beispiel 9 zu einem Hohlfaden versponnen.

Die Spinndüse hatte eine Austrittsfläche von 0,06 $mm^2$, die Bohrung der Innenfüllungszuführung betrug 0,25 mm im Durchmesser.

Es wurden 4,6 ml/min Spinnlösung und 2,0 ml Stickstoff bei einem Druck von 22 mbar gemeinsam extrudiert, wobei die Spinngeschwindigkeit 55 m/min betrug. Das Weichmacherbad enthielt eine wäßrige Lösung von 9 g/l Glycerin.

Der trockene Hohlfaden besaßt eine Wandstärke von 8,1 µm und einen inneren Durchmesser von 202 µm, der Glyceringehalt war 4,8%. Der mittlere Veretherungsgrad betrug x = 0,017.

Bei einer Bruchkraft von 118 cN und einer Bruchdehnung von 51% zeigte die Hohlfadenmembran folgende Leistung:

| | |
|---|---|
| UFR: | $4{,}59 \cdot 10^{-2}$ ml/h • $m^2$ • Pa (6,1 ml/h • $m^2$ • mm Hg) |
| DL-Vit. B12: | 7,1 cm/min • $10^{-3}$ |
| DL-Kreatinin: | 56 cm/min • $10^{-3}$ |
| Siebkoeffizient für Albumin: | 0 |
| Siebkoeffizient für Cytochrom-C: | 0,14 |

Im Vergleich zu Cuprophan$^R$ ist die C5a-Aktivierung um 89% vermindert. Die Thrombogenität ist vergleichbar mit der von Cuprophan$^R$.

**Beispiel 11:**

Eine Cuoxam-Spinnlösung der Zusammensetzung wie in Beispiel 7 wurde über einen Cuprophan-Flachgießer von 60 cm Gießbreite mit einer Gießschlitzweite von 0,25 mm in ein wäßriges Fällbad, das 90 g/NaOH, 6 g/l $NH_3$ und 0,8 g/l Cu enthielt, so vergossen, daß die aus dem Flachgießer austretende Spinnlösung einen Luftspalt von 18 mm Weite durchfiel, dann in das Fällbad bis zu einer Tiefe von 80 cm eintauchte und nach Umlenkung an dieser Stelle mittels einer angetriebenen Walze weitere 250 cm des Fällbades durchlief.

Danach wurde die für Cuprophan übliche Regenerierung und Auswaschung in den konventionellen Bädern durchgeführt.

Es entstand eine flache Membran von 32 cm Breite und einer Wandstärke von 14 µm mit einer restlichen Feuchte von 8,5% und einem Glyceringehalt von 32%. Die Flachmembran wies einen mittleren Veretherungsgrad von x = 0,017 auf.

An dieser Flachmembran konnten die folgenden Daten gemessen werden:

| | |
|---|---|
| UFR: | $4{,}89 \cdot 10^{-2}$ ml/h • $m^2$ • Pa (6,5 ml/h • $m^2$ • mm Hg) |
| DL-Vit.B12: | 8,1 cm/min • $10^{-3}$ |
| DL-Kreatinin: | 51,5 cm/min • $10^{-3}$ |
| DL-Harnstoff: | 56 cm/min • $10^{-3}$ |
| DL-NaCl: | 61 cm/min • $10^{-3}$ |

Die Durchlässigkeit für Albumin war 0, der Siebkoeffizient für Cytochrom-C betrug 0,11.
Im Vergleich zu Cuprophan$^R$-Flachmembran ist die C5a-Aktivierung um 81% vermindert.

Die Thrombogenität war mit der von Cuprophan$^R$ vergleichbar. Die Membran absorbierte kein Heparin.

**Beispiel 12:**

In einem 10 l Drais-Mischer wurden 324 g (2 Mol) Linters Cellulose (DP: 1350 in Cuen) mit 10 g (0,25 Mol) Natriumhydroxid, gelöst in 250 ml Wasser, eine Stunde bei 16°C alkalisiert. Nach Zusatz von 250 ml i-Propanol und 6,325 g (0,05 Mol) Benzylchlorid wurde das Gemisch sechs Stunden bei 80°C gerührt. Das Reaktionsprodukt wurde in Ethanol aufgenommen, abgesaugt, nacheinander mit Ethanol, Wasser und Ethanol alkali- und chloridfrei gewaschen und im Vakuumtrockenschrank bei 60°C getrocknet. Dabei wurden 320 g eines Produktes mit einem Veretherungsgrad von x = 0,006 und einem DP von 1050 (in Cuen) erhalten.

Nach bekannter Verfahrensweise wurde eine Cuoxamlösung mit 9 Gew% Benzylcellulose-Gehalt hergestellt. Die mit einem Ubbelohde-Viskosimeter nach Gleichung 1 ermittelte Viskosität (η) betrug 36 Pa.s.

$$\eta_{rel} = \frac{\text{Durchlaufzeit der Lösung}}{\text{Durchlaufzeit des Lösungsmittels}} \quad \text{Gleichung 1:}$$

**Beispiel 13:**

In einem 10 l Drais-Mischer wurden 324 g (2 Mol) Linters Cellulose (DP: 1350 in Cuen) mit 16 g (0,40 Mol) Natriumhydroxid, gelöst in 400 ml Wasser, eine Stunde bei 16°C alkalisiert. Nach Zusatz von 25,3 g (0,20 Mol) Benzylchlorid wurde das Gemisch vier Stunden bei 80°C gerührt. Das Reaktionsprodukt wurde in Ethanol aufgenommen, abgesaugt, nacheinander mit Ethanol, Wasser und Ethanol alkali- und chloridfrei gewaschen und im Vakuumtrockenschrank bei 60°C getrocknet. Dabei wurden 321 g eines Produktes mit einem Veretherungsgrad von x = 0,02 und einem DP von 900 (in Cuen) erhalten.
Die Viskosität einer Cuoxamlösung mit 9 Gew% Benzylcellulosegehalt betrug 20 Pa.s.

**Beispiele 14 - 19:**

Analog Beispiel 12 bzw. 13 wurden die in der Tabelle 2 aufgeführten Celluloseether synthetisiert, in Cuoxam gelöst und ihre Viskosität ermittelt. (Beispiele 14 bis 17). Als Vergleich hierzu werden in der Tabelle 2 Linters Cellulose (Beispiel 18) und Zellstoff (Beispiel 19) wiedergegeben.

Tabelle 2

| Beispiel | R | x | DP (in Cuen) | Etherkonzentration (Gew%) | Viskosität Pa.s |
|---|---|---|---|---|---|
| 14 | Benzyl | 0,05 | 850 | 9 | 24 |
| 15 | Benzyl | 0,075 | 820 | 9 | 46 |
| 16 | Dodecyl | 0,008 | 900 | 12 | 20 |
| 17 | Dodecyl | 0,013 | 860 | 10 | 25 |
| 18 (Linters Cellulose) | - | - | 1350 | 9 | 100 |
| 19 (Zellstoff) | - | - | 600 | 9 | 45 |

**Beispiel 20:**

Es wurde eine Cuoxam-Spinnlösung mit einem Gehalt von 5,89 Gew.% Linters Cellulose, 0,31 Gew% Benzylcellulose aus Beispiel 6, 8,5 Gew.% $NH_3$ und 2,6 Gew% Cu hergestellt. Diese wurde mittels einer Hohlfadendüse mit einem Austrittsschlitz von 0,08 $mm^2$ Fläche und einer Innenfüllungsbohrung von 0,25 mm Durchmesser so zu einem Hohlfaden versponnen, daß die Spinndüse 18 cm unter der Fällbadoberfläche mit nach oben zeigenden Austrittsöffnungen angebracht war. Als Innenfüllung diente trockener Stickstoff. Die Menge der Spinnlösung betrug 7,0 ml/min und die Menge des Stickstoffes 2,0 ml/min bei einem Druck von 22 mbar.

Das wäßrige Fällbad (Temperatur = 19,5°C) enthielt 130 g/l NaOH, 6 g/l $NH_3$ und 0,5 g/l Cu.

Der aus der untergetauchten Spinndüse austretende Hohlfaden wurde senkrecht nach oben durch das Fällbad geführt und in einer Höhe von 30 cm oberhalb des Badspiegels zur Weiterbehandlung in Maschinenlaufrichtung umgelenkt.

Die weitere Behandlung erfolgte in konventionellen Bädern wie in Beispiel 7.

Nach dem Trocknen enthielt der Hohlfaden eine Restmenge von 16% Wasser und einen Glyceringehalt von 52%. Der mittlere Veretherungsgrad betrug x = 0,0037.

Die Wandstärke betrug 18,2 µm und der innere Durchmesser 204 µm bei einer Bruchkraft von 62 cN und einer Bruchdehung von 52%.

Folgende Daten konnten an diesem Material gemessen werden:

| | |
|---|---|
| UFR: | $42{,}11 \cdot 10^{-2}$ ml/h • m² • Pa (56 ml/h • m² • mm Hg) |
| DL-Vit.B12: | $15{,}7$ cm/min • $10^{-3}$ |
| DL-Kreatinin: | 58 cm/min • $10^{-3}$ |
| Siebkoeffizient für Albumin: | 0,043 |
| Siebkoeffizient für Cytochrom-C: | 0,819 |

Im Vergleich zu Cuprophan[R] ist die C5a-Aktivierung um 78% vermindert. Die Thrombogenitätsparameter TAT und PC sowie die Heparin Absorption waren mit denen vom Standard-Cuprophan[R] vergleichbar.

**Beispiel 21:**

In einem 10 l-Drais-Mischer wurden 324 g (2 Mol) Linters Celllulose (DP: 1350 in Cuen) mit 40 g (1 Mol) Natriumhydroxid, gelöst in 350 ml Wasser, eine Stunde bei 16°C alkalisiert. Nach Zusatz von 80 ml Isopropanol und 78 g (0,60 Mol) tert. Butylglycidether wurde das Gemisch 4 Stunden bei 75°C gerührt. Das Reaktionsprodukt wurde in Ethanol aufgenommen, abgesaugt, nacheinander mit Ethanol, Wasser und Ethanol alkalifrei gewaschen und im Vakuumtrokkenschrank bei 60°C getrocknet. Dabei wurden 332,5 g eines Produktes mit einem Veretherungsgrad von x = 0,077 erhalten.

Aus diesem Produkt wurde nach üblicher Verfahrensweise eine Cuoxamlösung mit 9 Gew% Polysaccharidgehalt hergestellt und im Labor zu Flachmembranen verarbeitet. Im Vergleich zu unmodifizierter Cellulose-Membran ist die $C_{5a}$-Aktivierung um 75% vermindert. Die Thrombogenität und Heparinabsorption sind mit denen von Standard-Cuprophan[R] vergleichbar.

**Beispiele 22 - 26:**

Analog dem Beispiel 21 wurden durch Umsetzung von Linters Cellulose mit Butylglycidether, Benzylglycidether, Dodecylglycidether, Cyclohexylglycidether, Dodecanepoxid, bzw. 1,2-Epoxy-3-phenoxypropan die in der Tabelle 3 aufgeführten Cellulosederivate synthetisiert und aus Cuoxamlösungen zu Flachmembranen verarbeitet und untersucht. Im Vergleich zu unmodifizierter Cellulose-Membran zeigen die modifizierten Membranen eine verminderte $C_{5a}$-Aktivierung. Die Thrombogenität und Heparinabsorption sind mit denen von Standard-Cuprophan[R] vergleichbar.

Tabelle 3

| Beispiel | R | x | $C_{5a}$-Reduktion |
|---|---|---|---|
| 22 | $-CH_2-CH(OH)-CH_2-O-nC_4H_9$ | 0,079 | 70 |
| 23 | $-CH_2-CH(OH)-CH_2-O-CH_2-C_6H_5$ | 0,075 | 85 |
| 24 | $-CH_2-CH(OH)-CH_2-O-C_{12}-H_{25}$ | 0,076 | 80 |
| 25 | $-CH_2-CH(OH)-CH_2-O-C_6H_5$ | 0,078 | 85 |
| 26 | $-CH_2-CH(OH)-CH_2-O-C_6H_{11}$ | 0,074 | 80 |
| 27 | $-CH_2-CH(OH)-C_{10}H_{21}$ | 0,072 | 75 |

**Beispiel 28:**

In einem Duplex-Kneter wurden 8 g Benzylcellulose aus dem Beispiel 6 mit 15 g Wasser und 77 g N-Methyl-morpholin-N-oxid vermischt. Das Gemisch wurde anschließend bei 110°C so lange erhitzt, bis sich die Benzylcellulose vollständig gelöst hatte. Die Lösung wurde mit Hilfe eines Folienziehgerätes auf eine heiße Platte aufgetragen, dann mit Wasser ausgefällt, die Membran mit Wasser gründlich gewaschen und geprüft. Im Vergleich zu unmodifizierter Membran ist die $C_{5a}$-Aktivierung um 90% reduziert. Die Thrombogenität und Heparinabsorption sind mit denen von Standard-Cuprophan[R] vergleichbar.

**Beispiel 29:**

In einem Dreihalskolben mit Rührer und Rückflußkühler wurden 40 g Benzylcellulose aus dem Beispiel 6 in 880 g Dimethylacetamid und 80 g Lithiumchlorid gelöst und zu Flachmembranen verarbeitet. Im Vergleich zu unmodifizierter Membran ist die $C_{5a}$-Aktivierung um 93% reduziert. Die Thrombogenität und Heparinabsorption sind mit denen von Standard-Cuprophan[R] vergleichbar.

## Patentansprüche

1. Dialysemembran für die Hämodialyse in Form von Flachfolien, Schlauchfolien oder Hohlfäden aus Polysaccharidether, dadurch gekennzeichnet, daß der Polysaccharidether eine durch die Formel

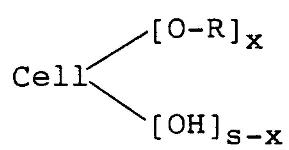

wiedergegebene Struktur aufweist, worin Cell das Gerüst des unmodifizierten Cellulosemoleküls oder des Chitinmoleküls jeweils ohne Hydroxylgruppen ist, s beim unmodifizierten Cellulosemolekül 3 und beim Chitinmolekül 2 beträgt und x dem Veretherungsgrad entspricht, der im Bereich von 0,001 bis 0,079 liegt und worin R ein Alkyl-, Alkenyl-, Alkinyl-, Cycloalkyl-, Cycloalkenyl-, Cycloalkinyl-, Aryl-, Arylalkyl-, Arylalkenyl- und/oder Arylalkinyl-Rest mit 3 bis 25 C-Atomen und/oder der Rest einer heterocyclischen Verbindung mit 3 bis 25 C-Atomen ist, die mit der Maßgabe substituiert sein können, daß der Substituent eine nicht-ionische Gruppe OR', SR', Halogen und/oder R' darstellt, worin R'=H, Methyl, Ethyl oder R ist und wobei dann die Kohlenstoffkette durch Sauerstoff- oder Schwefelatome unterbrochen sein kann.

2. Dialysemembran nach Anspruch 1, dadurch gekennzeichnet, daß R einer Benzyl-, Methylbenzyl-, Methoxybenzyl-, Chlorbenzyl-, Hexyl-, Dodecyl- oder Octadecyl-Gruppe entspricht.

3. Dialysemembran nach Anspruch 1, dadurch gekennzeichnet, daß R einer Hydroxypropyl-, Hydroxybutyl-, Hydroxydodecyl-, 2-Hydroxypropylbutylether-, 2-Hydroxypropyldodecylether, 2-Hydroxypropylcyclohexylether-, 2-Hydroxypropylbenzylether- oder 2-Hydropropylphenylether-Gruppe entspricht.

4. Dialysemembran nach einem oder mehreren der Ansprüche 1 bis 3, dadurch gekennzeichnet, daß $x = 0{,}001$ bis $0{,}019$ beträgt.

5. Dialysemembran nach einem oder mehreren der Ansprüche 1 bis 3, dadurch gekennzeichnet, daß $x = 0{,}071$ bis $0{,}079$ beträgt.

6. Dialysemembran nach einem oder mehreren der Ansprüche 1 bis 5, dadurch gekennzeichnet, daß die Membran aus einer wäßrigen Spinnlösung, die Polysaccharidether enthält, hergestellt wird.

7. Dialysemembran nach Anspruch 6, dadurch gekennzeichnet, daß die wäßrige Spinnlösung eine Cuoxamlösung ist.

8. Dialysemembran nach Anspruch 6, dadurch gekennzeichnet, daß die Membran aus einer wasserhaltigen N-Oxid-tert.-Amin-Spinnlösung, die Polysaccharidether enthält, hergestellt wird.

9. Dialysemembran nach Anspruch 8, dadurch gekennzeichnet, daß die wasserhaltige N-Oxid-Spinnlösung eine N-Methylmorpholin-N-oxid-Lösung ist.

10. Dialysemembran nach Anspruch 6, dadurch gekennzeichnet, daß die Membran aus einem Lithiumchlorid-haltigen amidischen organischen Lösungsmittel, das den Polysaccharidether enthält, hergestellt wird.

11. Dialysemembran nach Anspruch 10, dadurch gekennzeichnet, daß das Lithiumchlorid-haltige Lösungsmittel Lithiumchlorid/Dimethylacetamid oder Lithiumchlorid/N-Methylpyrrolidon ist.

**12.** Dialysemembran nach Anspruch 5 oder 6, dadurch gekennzeichnet, daß die Spinnlösung 2 bis 25 Gew.% Polysaccharidether enthält.

**13.** Dialysemembran nach Anspruch 12, dadurch gekennzeichnet, daß die Spinnlösung 5 bis 15 Gew% Polysaccharidether enthält.

**14.** Dialysemembran nach einem oder mehreren der Ansprüche 6 bis 13, dadurch gekennzeichnet, daß die Spinnlösung eine Viskosität von 10 bis 300 Pa.s aufweist.

**15.** Dialysemembran nach einem oder mehreren der Ansprüche 1 bis 14, dadurch gekennzeichnet, daß der Polysaccharidether einen Polymerisationsgrad (DP) von 200 bis 5000 aufweist.

## Claims

**1.** Dialysis membrane for haemodialysis in the form of flat films, tubular films or hollow filaments made of polysaccharide ether, characterised in that the polysaccharide ether possesses a structure represented by the formula

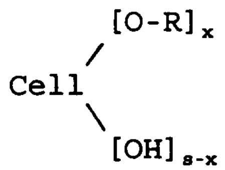

wherein Cell is the skeleton of the unmodified cellulose molecule or of the chitin molecule, in each case lacking hydroxyl groups, s is 3 in the unmodified cellulose molecule and 2 in the chitin molecule and x corresponds to the degree of etherification, which is in the range of from 0.001 to 0.079 and wherein R is an alkyl, alkenyl, alkinyl, cycloalkyl, cycloalkenyl, cycloalkinyl, aryl, arylalkyl, arylalkenyl and/or arylalkinyl radical having 3 to 25 C atoms and/or the radical of a heterocyclic compound having 3 to 25 C atoms, which may be substituted provided that the substituent is a nonionic group OR', SR', halogen and/or R', wherein R' is H, methyl, ethyl or R and wherein the carbon chain may then be interrupted by oxygen atoms or sulphur atoms.

**2.** Dialysis membrane according to claim 1, characterised in that R corresponds to a benzyl, methylbenzyl, methoxybenzyl, chlorobenzyl, hexyl, dodecyl or octadecyl group.

**3.** Dialysis membrane according to claim 1, characterised in that R corresponds to a hydroxypropyl, hydroxybutyl, hydroxydodecyl group, 2-hydroxypropyl butyl ether group, 2-hydroxypropyl dodecyl ether group, 2-hydroxypropyl cyclohexyl ether group, 2-hydroxypropyl benzyl ether group or 2-hydroxypropyl phenyl ether group.

**4.** Dialysis membrane according to one or more of claims 1 to 3, characterised in that x is 0.001 to 0.019.

**5.** Dialysis membrane according to one or more of claims 1 to 3, characterised in that x is 0.071 to 0.079.

**6.** Dialysis membrane according to one or more of claims 1 to 5, characterised in that the membrane is prepared from an aqueous spinning solution which contains polysaccharide ether.

**7.** Dialysis membrane according to claim 6, characterised in that the aqueous spinning solution is a cuoxam solution.

**8.** Dialysis membrane according to claim 6, characterised in that the membrane is prepared from a hydrous N oxide-tert. amine spinning solution which contains polysaccharide ether.

**9.** Dialysis membrane according to claim 8, characterised in that the hydrous N oxide spinning solution is an N-methylmorpholine-N oxide solution.

**10.** Dialysis membrane according to claim 6, characterised in that the membrane is prepared from an organic amide solvent containing lithium chloride, which solvent contains the polysaccharide ether.

11. Dialysis membrane according to claim 10, characterised in that the solvent containing lithium chloride is lithium chloride/dimethylacetamide or lithium chloride/N-methylpyrrolidone.

12. Dialysis membrane according to claim 5 or 6, characterised in that the spinning solution contains from 2 to 25 wt.% of polysaccharide ether.

13. Dialysis membrane according to claim 12, characterised in that the spinning solution contains from 5 to 15 wt.% of polysaccharide ether.

14. Dialysis membrane according to one or more of claims 6 to 13, characterised in that the spinning solution has a viscosity of from 10 to 300 Pa.s.

15. Dialysis membrane according to one or more of claims 1 to 14, characterised in that the polysaccharide ether has a degree of polymerisation (DP) of from 200 to 5000.

**Revendications**

1. Membrane de dialyse pour l'hémodialyse sous forme de feuilles planes, de feuilles en gaine ou de fibres creuses en éther de polysaccharide, caractérisée en ce que l'éther de polysaccharide a une structure représentée par la formule

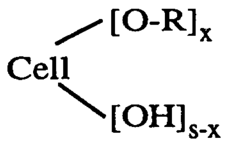

dans laquelle *Cell* représente le squelette de la molécule de cellulose ou de chitine non modifiées à l'exclusion des fonctions hydroxyle, s vaut 3 pour la molécule de cellulose non modifiée et 2 pour la molécule de chitine non modifiée et x correspond au taux d'éthérification qui est compris entre 0,001 et 0,079, et dans laquelle R représente un groupe alkyle, alcényle, alcynyle, cycloalkyle, cycloalcényle, cycloalcynyle, aryle, arylalkyle, arylalcényle et/ou arylalcynyle tous comportant de 3 à 25 atomes de carbone et/ou le résidu d'un composé hétérocyclique comportant de 3 à 25 atomes de carbone qui peut être substitué avec la condition que le substituant soit un groupe non ionique -OR', -SR', halogéno et/ou -R', où -R' représente un résidu H, méthyle, éthyle ou R, et la chaîne carbonée pouvant être interrompue par la présence d'atomes d'oxygène ou de soufre.

2. Membrane pour dialyse conforme à la revendication 1 caractérisée en ce que R représente un groupe benzyle, méthylbenzyle, méthoxybenzyle, chlorobenzyle, hexyle, dodécyle ou octadécyle.

3. Membrane pour dialyse conforme à la revendication 1 caractérisée en ce que R représente un groupe hydroxypropyle, hydroxybutyle, hydroxydodécyle, 2-hydroxypropylbutyléther, 2-hydroxypropyldodécyléther, 2-hydroxypropylcyclohexyléther, 2-hydroxypropylbenzyléther ou 2-hydroxypropylphényléther.

4. Membrane pour dialyse conforme à une ou plusieurs des revendications 1 à 3 caractérisée en ce que x = 0,001 à 0,019.

5. Membrane pour dialyse conforme à une ou plusieurs des revendications 1 à 3 caractérisée en ce que x = 0,071 à 0,079.

6. Membrane pour dialyse conforme à une ou plusieurs des revendications 1 à 5 caractérisée en ce que la membrane est préparée à partir d'une solution à filer aqueuse contenant de l'éther de polysaccharide.

7. Membrane de dialyse conforme à la revendication 6 caractérisée en ce que la solution à filer aqueuse est une solution dans le cuoxam (liqueur contenant de l'hydroxyde de cupritétrammine).

8. Membrane pour dialyse conforme à la revendication 6 caractérisée en ce que la membrane est préparée à partir d'une solution à filer qui est une solution d'éther de polysaccharide dans une amine tertiaire N-oxydée contenant de l'eau.

9. Membrane pour dialyse conforme à la revendication 8 caractérisée en ce que la solution à filer dans un composé N-oxydé contenant de l'eau est une solution dans la N-méthylmorpholine N-oxydée.

10. Membrane pour dialyse conforme à la revendication 6 caractérisée en ce que la membrane est préparée à partir d'une solution d'éther de polysaccharide dans un solvant organique de type amide contenant du chlorure de lithium.

11. Membrane pour dialyse conforme à la revendication 10 caractérisée en ce que le solvant contenant du chlorure de lithium est un mélange chlorure de lithium/diméthylacétamide ou chlorure de lithium/N-méthylpyrrolidone.

12. Membrane pour dialyse conforme à la revendication 5 ou 6 caractérisée en ce que la solution à filer contient de 2 à 25 % en poids d'éther de polysaccharide.

13. Membrane pour dialyse conforme à la revendication 12 caractérisée en ce que la solution à filer contient de 5 à 15 % en poids d'éther de polysaccharide.

14. Membrane pour dialyse conforme à une ou plusieurs des revendications 6 à 13 caractérisée en ce que la solution à filer a une viscosité comprise entre 10 et 300 Pa.s.

15. Membrane pour dialyse conforme à une ou plusieurs des revendications 1 à 14, caractérisée en ce que l'éther de polysaccharide a une degré de polymérisation (DP) compris entre 200 et 5000.